(19) Europäisches Patentamt
European Patent Office
Office européen des brevets

(11) **EP 1 500 952 B1**

(12) **EUROPÄISCHE PATENTSCHRIFT**

(45) Veröffentlichungstag und Bekanntmachung des Hinweises auf die Patenterteilung:
**07.03.2007 Patentblatt 2007/10**

(51) Int Cl.:
*G01S 13/44* *(2006.01)*     *G01S 13/93* *(2006.01)*
*G01S 13/48* *(2006.01)*

(21) Anmeldenummer: **04102301.1**

(22) Anmeldetag: **25.05.2004**

(54) **Verfahren zur Winkelbestimmung bei Mehrzielszenarien für Mehrkeulen-Monopulsradar**

Method of direction determination for multiple target situations for multi-lobe monopulse radar

Procédé pour la détermination de directions dans la présence de cibles multiples pour un radar monopulse à lobes multiples

(84) Benannte Vertragsstaaten:
**DE FR GB IT**

(30) Priorität: **22.07.2003 DE 10333191**

(43) Veröffentlichungstag der Anmeldung:
**26.01.2005 Patentblatt 2005/04**

(73) Patentinhaber: **ROBERT BOSCH GMBH**
**70442 Stuttgart (DE)**

(72) Erfinder: **Schoebel, Joerg**
**38226, Salzgitter (DE)**

(56) Entgegenhaltungen:
**WO-A-01/59473        US-A- 5 706 012**
**US-B1- 6 337 656**

**Beschreibung**

**Technisches Gebiet**

Die Erfindung betrifft ein Verfahren zur Winkelbestimmung bei Mehrzielszenarien für Mehrkeulen-Monopulsradar für die Umfeldsensorik mit Automobilradarsystemen für Fahrerassistenz- und Sicherheitssysteme, wie adaptive Geschwindigkeitsregelung, Rückfahr- und Einparkhilfe, Tote-Winkel-Überwachung, automatische Notbremse und dergleichen, wobei über eine oder mehrere Antennen in der Azimut-Ebene mehrere Strahlkeulen ausgebildet werden, die sich jeweils paarweise in Teilbereichen überlappen und über die das Radarsignal gleichzeitig oder in zeitlicher Abfolge ausgesendet wird und das reflektierte Signal über die Strahlkeulen ebenfalls gleichzeitig oder in zeitlicher Abfolge empfangen und weiter verarbeitet wird.

**Stand der Technik**

Ein Prinzip, nach dem Automobilradarsysteme zur adaptiven Geschwindigkeitsregelung - ACC "adaptive cruise control" - arbeiten, ist bekanntlich das Mehrkeulen-Monopulsradar, wie aus dem Beitrag "Adaptive Fahrgeschwindigkeitsregelung ACC" / Bosch, Stuttgart: Robert Bosch GmbH 2002, ISBN 3-7782-2034-9 hervorgeht. Das Prinzip des Monopuls-Radars wird in Skolnik, M.I.: "Introduction to Radar-Systems", 2nd ed., Singapore: McGraw-Hill International Editions 1981 beschrieben. Dabei werden über eine oder mehrere Antennen in der Azimut-Ebene mehrere Strahlkeulen ausgebildet, die sich jeweils paarweise in Teilbereichen überlappen. Die Antennen können sowohl als Linsenantennen ausgebildet sein, wobei jeder Strahlkeule eine Speisung zugeordnet ist, oder aber auch als planare Antenne, um nur beispielhaft einige der bekannten Antennen zu nennen. Ausgehend von der Linsenantenne wird das Radarsignal über die Strahlkeulen gleichzeitig oder in zeitlicher Abfolge oder über eine weitere Strahlkeule einer separaten Antenne ausgesendet. Das reflektierte Signal wird über die Strahlkeulen ebenfalls gleichzeitig oder in zeitlicher Abfolge oder über eine weitere Strahlkeule einer separaten Antenne empfangen und weiter verarbeitet. Die modulierten Hochfrequenzsignale werden dabei ins Basisband umgesetzt, digitalisiert und gegebenenfalls fouriertransformiert. Mit Hilfe eines geeigneten Modulationsverfahrens werden die Entfernungs- und Relativgeschwindigkeits-Informationen der Ziele mit einer bestimmten Auflösung hinsichtlich Entfernung und Geschwindigkeit ermittelt, so beispielsweise bei der FMCW-Modulation - "frequency-modulated continous wave" - aus den Frequenzkomponenten der fouriertransformierten Basisbandsignale. Die Genauigkeit der Entfernungs- und Geschwindigkeitsbestimmung ist daher auf Entfernungs- und Geschwindigkeitszellen mit jeweils endlicher Größe begrenzt.

Soll aus den Verhältnissen der Amplituden und/oder der Phasen der Empfangssignale der Strahlkeulen die azimutale Winkelposition bestimmt werden, so ist es bekannt, im Wesentlichen die beiden nachfolgenden Verfahren einzusetzen:

1. Im Speicher der Auswerteeinheit abgelegte Signalmuster mit zugehörigen Winkelwerten werden nach maximaler Übereinstimmung mit den (gegebenenfalls geeignet normierten) Empfangssignalen durchsucht. Der Winkelwert des Signalmusters mit der größten Übereinstimmung mit den Empfangssignalen wird als Zielwinkel der Weiterverarbeitung übergeben.

2. Der Zusammenhang Zielwinkel in Abhängigkeit von Amplituden- und/oder Phasenverhältnissen der Empfangssignale wird mit einer geeigneten Funktion näherungsweise angepasst. Mit dieser Funktion lässt sich aus den Empfangssignalen direkt der Zielwinkel berechnen.

Es hat sich gezeigt, dass eine derartig vorgenommene Winkelbestimmung dann problematisch wird, wenn sich mehr als ein Radarziel in der gleichen Entfernungs- und Geschwindigkeitszelle befindet, wenn sich also die Ziele entfernungs- und geschwindigkeitsmäßig nicht mehr trennen lassen, so dass die Empfangssignale für die Entfernungs- und Geschwindigkeitszelle dann von beiden Zielen beeinflusst werden. Das besonders deshalb, weil die gegenwärtig eingesetzten Algorithmen es nicht erlauben, eine Winkelbestimmung beider Ziele vorzunehmen.

Patentschrift US-A-6337656 offenbart ein Verfahren nach dem Oberbegriff des Anspruchs 1.

**Darstellung der Erfindung, Aufgabe, Lösung, Vorteile**

Durch die Erfindung wird ein Verfahren zur Winkelbestimmung bei Mehrzielszenarien für Mehrkeulen-Monopulsradar geschaffen, durch das auch dann, wenn sich mehr als ein Ziel, beispielsweise zwei Ziele, in der gleichen Entfernungs- und Geschwindigkeitszelle befinden, so dass sich die Ziele entfernungs- und geschwindigkeitsmäßig nicht mehr trennen lassen, nicht nur die Erkennung von Mehrzielszenarien, sondern auch eine relativ sichere Winkelbestimmung zumindest von zwei Zielen bei gleichzeitiger Gütebewertung der Winkelbestimmung ermöglicht wird.

Diese Vorteile werden durch ein Verfahren erreicht, bei dem ein die Trennung der Signalanteile der einzelnen Ziele herbeiführender Algorithmus zur Anwendung kommt, der im Wesentlichen folgende Verfahrensschritte beinhaltet:

- Bestimmung von zwei benachbarten Strahlkeulen, in denen die größten Signalamplituden auftreten,

- Ermittlung der Winkelposition des jeweiligen Zieles aus den beiden ausgewählten Signalen der benachbarten Strahlkeulen, in denen die größten Signalamplituden auftreten,

- Einholung eines normierten "idealen" Einziel-Signalmusters aus dem Speicher des Prozessors des Radarsystems für die Winkelposition des jeweiligen Zieles aus den beiden ausgewählten Signalen,

- Bildung des Skalarproduktes aus den Basisband-Empfangssignalen der Strahlkeulen mit dem "idealen" Einziel-Signalmuster für den Zielwinkel des Zyklus bei Abbildung des "idealen" Einziel-Signalmusters auf die Basisband-Empfangssignale nach der Gleichung:

$$s_j = \sum_n S_n \cdot Z_n \, (\alpha_j)^\star,$$

- die Ermittlung der Signalamplituden durch Bildung des Produktes aus dem Ergebnis des Skalarproduktes mit dem Einziel-Signalmuster und Subtraktion des Produktes von den Basisband-Empfangssignalen nach der Gleichung:

$$S_n^{neu} = S_n - s_j \cdot Z_n \, (\alpha_j),$$

- Überprüfung der Signalamplituden anhand einer Schwelle, ob sie Signale eines weiteren Zieles enthalten, und Starten eines neuen Zyklus mit $S_n^{neu}$ als Eingangsgröße, wenn es Signalanteile gibt, die auf ein weiteres Ziel hinweisen.

Es sind drei Ausführungen der Strahlkeulen möglich:

1. mehrere Strahlkeulen, die sich jeweils paarweise in Teilbereichen überlappen; gesendet wird über diese Strahlkeulen gleichzeitig oder in zeitlicher Abfolge und empfangen wird ebenfalls über diese Strahlkeulen gleichzeitig oder in zeitlicher Abfolge,

2. mehrere Strahlkeulen, die sich jeweils paarweise in Teilbereichen überlappen und eine separate Strahlkeule (die sich über den gesamten Erfassungsbereich der sich paarweise überlappenden Strahlkeulen erstreckt); gesendet wird über die separate Strahlkeule und empfangen wird (gleichzeitig oder in zeitlicher Abfolge) über die sich überlappenden Strahlkeulen,

3. mehrere Strahlkeulen, die sich jeweils paarweise in Teilbereichen überlappen und eine separate Strahlkeule (die sich über den gesamten Erfassungsbereich der sich paarweise überlappenden Strahlkeulen erstreckt); gesendet wird (gleichzeitig oder in zeitlicher Abfolge) über die sich überlappenden Strahlkeulen und empfangen wird über die separate Strahlkeule.

Befinden sich bei der Durchführung des Verfahrens bei der Bestimmung der beiden benachbarten Strahlkeulen, in denen die größten Signalamplituden auftreten, mehrere Ziele in der Entfernungs- und Geschwindigkeitszelle, so werden diese beiden Signalanteile vom stärksten Ziel dominiert.

Benachbarte Strahlkeulen können vorzugsweise die Strahlkeule mit größter Amplitude und die benachbarte Strahlkeule mit größerer Amplitude, die benachbarten Strahlkeulen, deren Summe am größten ist, oder ein gleichartiges Kriterium bei der Betrachtung benachbarter Strahlkeulen sein.

Bei dem Verfahrensschritt, bei dem eine Ermittlung der Winkelposition des jeweiligen Zieles aus den beiden ausgewählten Signalen der benachbarten Strahlkeulen, in denen die größten Signalamplituden auftreten, erfolgt, kann vorteilhafterweise die Ermittlung durch eine Suche über im Speicher des Prozessors des Radarsystems abgelegte Signalmuster vorgenommen werden oder aber der Zielwinkel direkt aus dem Betragsverhältnis und/oder Phasenverhältnis und/oder komplexen Quotienten der beiden ausgewählten Signale der benachbarten Strahlkeulen berechnet werden.

Bei dem durch das Verfahren vorgesehenen Einholen eines normierten "idealen" Einziel-Signalmusters wird dieses durch Kalibrationsmessungen eines Radarzieles in Abhängigkeit vom Zielwinkel im Speicher des Prozessors des Radarsystems hinterlegt, wobei Zwischenwerte für weitere Zielwinkel nach Betrag und Phase interpoliert werden.

Schließlich bleiben bei der Durchführung des Verfahrens gemäß dem Verfahrensschritt, bei dem eine Ermittlung der Signalamplituden durch Subtraktion erfolgt, in den Signalamplituden nur dazu orthogonale Signalanteile erhalten, die entweder einem weiteren Ziel zuzuordnen oder Rauschen sind.

Damit wird durch das Verfahren eine näherungsweise Bestimmung der Winkelpositionen der Ziele in Mehrzielszenarien ermöglicht, wobei die Ziele keinen allzu geringen Abstand haben sollten. Wenn der Abstand der Ziele in der Größenordnung der Breite einer Strahlkeule liegt, ist eine Erkennung des Mehrzielszenarios möglich, wobei jedoch nur ein einziges Ziel mit einer Position zwischen den beiden tatsächlichen Zielen erkannt wird. Bei einem Abstand vom 1,5...2fachen der Breite einer Strahlkeule ist auch eine relativ sichere Bestimmung der Winkelposition beider Ziele möglich. Die Winkelbestimmung wird umso besser, je mehr sich der Radarquerschnitt der Ziele und damit die Stärke unterscheidet. Für eine Winkelbestimmung beider Ziele sollten die Ziele daher in nicht benachbarten Strahlkeulen liegen oder aber jeweils jenseits der Mitte an den voneinander abgewandten Seiten zweier benachbarter Strahlkeulen.

Gemäß einem weiteren Merkmal der Erfindung werden den aus der Ermittlung der Winkelposition des jeweiligen Zieles resultierenden Winkelwerten Gütemaße zugeordnet, so dass durch einen nachgeschalteten Tracking-Algorithmus auch die Qualität und die Sicherheit der Winkelbestimmung berücksichtigt wird.

In weiterer Ausgestaltung des Verfahrens nach der Erfindung werden die Gütemaße zu den Radarzielen bei einer Fusion der Radardaten mit Videosensorik zugeordnet. Dabei wird gemäß einer Ausführungsvariante der Bereich verändert, in dem im Videobild nach einem vom Radar identifizierten Objekt gesucht wird, und zwar in Abhängigkeit von der Güte der Winkelbestimmung der Radarziele, wobei eine hohe Güte einem kleinen Suchbereich und eine niedrige Güte einem großen Suchbereich entspricht, in dem das jeweilige Ziel gesucht wird.

Aus der Forderung nach möglichst großer linearer Unabhängigkeit der Einzel-Signalmuster der jeweiligen Ziele ist bei der Anwendung des erfindungsgemäßen Verfahrens zwecks relativ sicherer Winkelbestimmung zumindest von zwei Zielen, auch dann, wenn sich mehr als zwei Ziele in der gleichen Entfernungs- und Geschwindigkeitszelle befinden, Folgendes zu berücksichtigen:

1. Ein minimaler Winkelabstand muss gegeben sein, damit sie als Zweizielszenario erkannt werden. Die Orthogonalität der Einzel-Signalmuster nimmt mit wachsendem Winkelabstand zu, weil bei einer Winkelposition im Bereich des Maximums einer bestimmten Strahlkeule auch die Signalamplitude dieser Strahlkeule maximal ist. Die Amplituden der Strahlkeulen mit größerem Winkelabstand vom Ziel sind hingegen relativ klein. Die lineare Abhängigkeit wird außerdem verringert durch die winkelabhängige Phase der Signale, wie zum Beispiel das Gütemaß 4 der nachfolgenden Tabelle zeigt. Dabei erzeugt das Ziel 1 große Amplituden in den Strahlkeulen 1 und 2 von vier Strahlkeulen und das Ziel 2 große Amplituden in den Strahlkeulen 3 und 4. Die Ziele beeinflussen die Winkelauswertung des jeweils anderen Ziels, die anhand der Signalanteile mit den größten Amplituden geschieht, nur schwach. Wenn die Ziele in benachbarten Strahlkeulen liegen, ist die gegenseitige Beeinflussung recht hoch, die Winkelbestimmung ist für beide Ziele dann ungenau beziehungsweise unzuverlässig, die Existenz eines Mehrzielszenarios wird aber recht sicher erkannt. Wenn die Ziele zu nahe beieinander liegen, so in derselben Strahlkeule oder an den einander zugewandten Seiten von zwei benachbarten Strahlkeulen, liefert das Verfahren die Winkelposition eines Ziels zwischen den beiden tatsächlichen Zielen.
Für die Winkelbestimmung beider Ziele sollten daher die Ziele stets in nicht benachbarten Strahlkeulen liegen oder jeweils jenseits der Mitte an den voneinander abgewandten Seiten zweier benachbarter Strahlkeulen.

2. Da die Ziele für eine Winkelbestimmung in nicht benachbarten Strahlkeulen liegen sollten, ist die Anzahl detektierbarer Ziele für eine bestimmte Anzahl Strahlkeulen begrenzt.

Aus der Abhängigkeit der Qualität der Winkelschätzung vom Abstand der Ziele beziehungsweise von der Lage der Ziele in benachbarten oder nicht benachbarten Strahlkeulen und den weiteren für die Winkelbestimmung herangezogenen Strahlkeulen ergeben sich somit Gütekriterien für die Winkelschätzung.

In der nachfolgenden Tabelle ist die Ermittlung eines Gütemaßes für ein System mit vier Strahlkeulen und maximal zwei Zielen beispielhaft aufgeführt.

| Gütemaß | Bedingungen | Bewertung der Winkelbestimmung |
|---|---|---|
| 5 | Winkelbestimmung für ein Ziel ist erfolgt, Skalarprodukt wurde gebildet und Einzelsignalmuster subtrahiert: alle Signalamplituden der Strahlkeulen sind unterhalb der Schranke. | Winkelbestimmung sehr sicher, nur ein Ziel detektiert, keine Hinweise auf weitere Ziele |
| 4 | Das Maximum der Signale der Strahlkeulen für Ziel 1 (am Anfang der Auswertung) und das Maximum für Ziel 2 (nach der Subtraktion des ersten Einziel-Signalmuster) liegen in nicht benachbarten Strahlkeulen (also in den Strahlkeulen 1 und 3, 1 und 4 oder 2 und 4). Die zur Auswertung herangezogenen Signale der Strahlkeulen wurden jeweils nur einmal verwendet (Strahlkeulen 1 und 2 für das 1. Ziel und Strahlkeulen 3 und 4 für das 2. Ziel. | Winkelbestimmung sicher |
| 3 | Die Maxima der Signale liegen für die beiden Ziele in Strahlkeulen 2 und 3, die jeweils zweitgrößten Amplituden, die für die Winkelbestimmung verwendet wurden, liegen in den Strahlkeulen 1 und 4. | Winkelbestimmung relativ sicher (gelegentlich Abweichungen um zirka $\pm 1°$) |
| 1.Ziel:3 2.Ziel:2 | Die Maxima der Signale liegen für die beiden Ziele in benachbarten Strahlkeulen und die Stärken der Ziele unterscheiden sich um einen Faktor von mehr als 10 (1. Ziel ist das stärkere). | |
| 2 | Maxima der Signale liegen für die beiden Ziele in benachbarten Strahlkeulen | Winkelbestimmung unsicher, für Tracking: Ziel ist noch vorhanden, Winkel gibt ungefähre Position |
| 2. Ziel von 3 od. 4 auf 2 reduziert | Amplitude in den Strahlkeulen nach Subtraktion des Einzel-Signalmusters größer als die Schwelle. Die Winkelschätzung zumindest des 2. Ziels war nicht optimal. | Winkelbestimmung des 2. Ziels unsicher. Ziel vorhanden, Winkel gibt ungefähre Position. |
| 1 | Amplituden weisen auf Ziel hin, Winkelbestimmung unmöglich | Existenz des Ziels für Tracking |
| 0 | Kein Ziel detektiert | |

Ein weiteres Kriterium ergibt sich aus dem Vergleich der Signalamplituden in den Strahlkeulen mit einer Schranke am Ende eines Auswertungszyklus. Wenn die Amplituden der Signale in den Strahlkeulen am Ende eines Zyklus nicht bedeutend kleiner geworden sind als sie am Anfang waren, ist entweder ein weiteres Ziel vorhanden oder die Winkelbestimmung der Ziele war in allen bisherigen Zyklen fehlerhaft. Die Unterscheidung lässt sich anhand von Plausibilitätskontrollen durchführen, wie zum Beispiel der maximalen Anzahl detektierbarer Ziele. Wenn beispielsweise in einem System mit vier Strahlkeulen nach der Winkelbestimmung des zweiten Ziels noch hohe Signalamplituden vorhanden sind, ist die Winkelbestimmung der beiden Ziele unsicher.

Da die Winkelbestimmung umso besser ist, je stärker sich die Radarquerschnitte der Ziele unterscheiden, kann aus dem Verhältnis des Betrags der Skalarprodukte aus den einzelnen Zyklen ein weiteres Gütekriterium abgeleitet werden, beispielsweise Gütemaß 3/2 in der Tabelle.

Weitere bevorzugte Ausgestaltungen der Erfindung ergeben sich aus den in den Unteransprüchen genannten Merkmalen.

## Kurze Beschreibung der Zeichnungen

Nachstehend wird die Erfindung in einem Ausführungsbeispiel anhand der beigefügten Zeichnungen näher erläutert. Es zeigen:

Figur 1 ein Diagramm eines ersten nach dem Verfahren zur Winkelbestimmung bei Mehrzielszenarien ablaufenden Zyklus;

Figur 2 ein Diagramm eines zweiten Zyklus, der sich an den nach Figur 1 anschließt;

Figur 3 ein Diagramm, in dem die Gütemaße in Anhängigkeit von der Lage der Ziele dargestellt sind und

Figur 4 ein Diagramm der Simulationsergebnisse, die aus einem an sich bekannten Antennendiagramm berechnet wurden.

## Bester Weg zur Ausführung der Erfindung

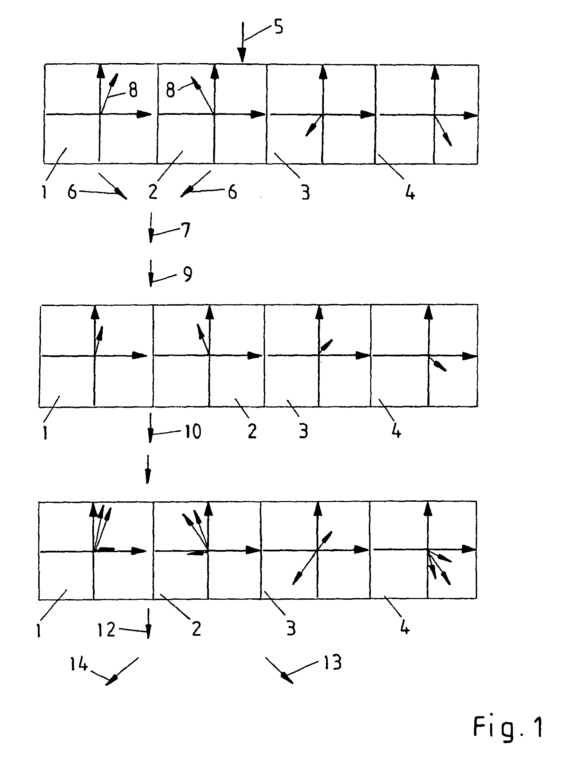

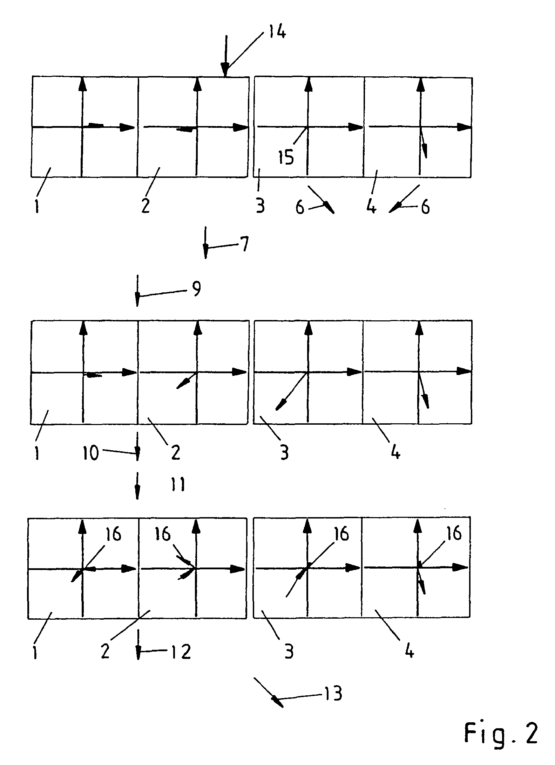

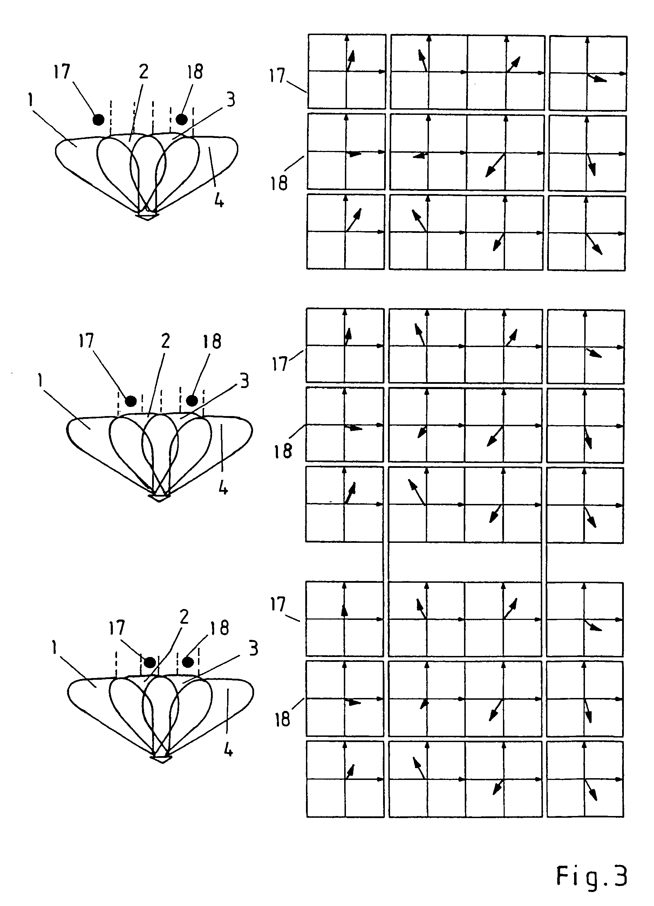

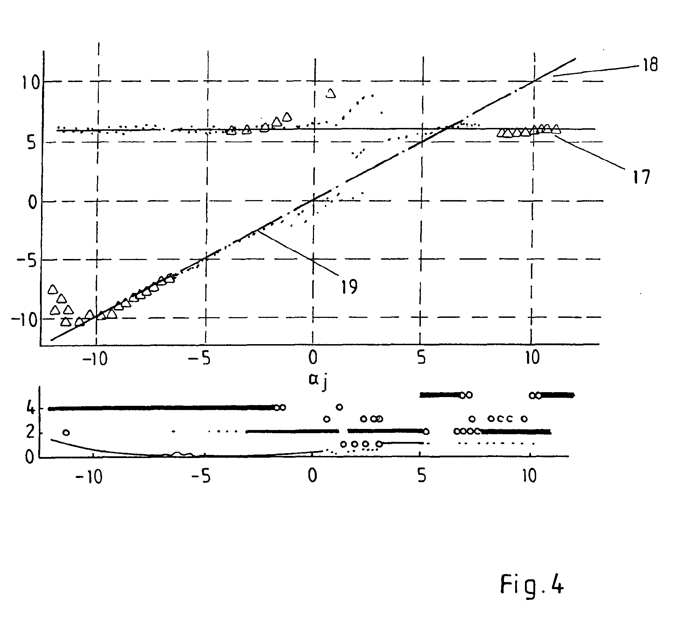

Gemäß Figur 1 wird bei der Winkelbestimmung von vier in Figur 3 dargestellten Strahlkeulen 1, 2, 3, 4 ausgegangen, wobei die aus den Verfahrensschritten des zur Anwendung kommenden Algorithmus resultierenden Aktivitäten dargestellt sind und der Zielwinkel im Überlappungsbereich der Strahlkeulen 1, 2 liegt. Dabei werden gemäß einem ersten Zyklus 5 ausgehend von den Basisband-Empfangssignalen $S_n$ in den Strahlkeulen 1, 2, 3, 4 durch die Aktivitäten 6 die betragsgrößten Signale bestimmt. Durch die Aktivität 7 erfolgt eine Bestimmung der Winkelposition des Zieles aus den beiden Signalen, in denen die größten Signalamplituden 8 auftreten. An diese Aktivität 7 schließt sich eine weitere Aktivität 9 an, durch die ein zu dem bestimmten Winkel gehörendes normiertes Einziel-Signalmuster $Z_n$ aus dem Speicher des Prozessors des Radarsystems geholt wird. Liegt das Einziel-Signalmuster $Z_n$ vor, so wird durch die Aktivität 10 das Skalarprodukt $s_j$ mit dem normierten Einziel-Signalmuster $Z_n$ gebildet. An diese Aktivität 10 schließt sich eine weitere Aktivität 11 an, gemäß der nach Subtraktion des Produktes aus dem Ergebnis des Skalarproduktes $s_j$ mit dem normierten Einziel-Signalmuster $Z_n$ von den Basisband-Empfangssignalen $S_n$ die Signalamplituden $S_n^{neu}$ ermittelt werden. Dabei sind die beiden Argumente der Subtraktion mit dünnen Linien dargestellt, während das Ergebnis der Signalamplituden $S_n^{neu}$ durch dicke Linien gekennzeichnet ist.
Schließlich erfolgt durch die Aktivität eine Überprüfung der Signalamplituden $S_n^{neu}$ anhand einer Schwelle. Sind die verbleibenden Signalanteile nicht größer, so erfolgt ein Abbruch 13. Sind diese jedoch größer als die Schwelle, so erfolgt ein neuer Zyklus 14.
Wie die Figur 2 zeigt, entspricht der Zyklus 14 und damit das Verfahren zur Winkelbestimmung ausgehend von den verbleibenden Signalanteilen dem ersten in Figur 1 dargestellten Zyklus 5. Das bedeutet, dass auch hier die aus den Verfahrensschritten des Algorithmus resultierenden Aktivitäten 6, 7, 9, 10, 11, 12 wirksam werden. Ausgegangen wird bei der Winkelbestimmung bei der Durchführung des zweiten Zyklus 14 jedoch von den Strahlkeulen 3, 4, da in deren Signalen die größten Signalamplituden 15 auftreten. Ergibt auch bei diesem zweiten Zyklus 14 eine Überprüfung der Signalamplituden $S_n^{neu}$ durch die Aktivität 12, dass die verbleibenden Signalanteile größer als die Schwelle sind, so kann sich an den zweiten Zyklus 14 ein weiterer Zyklus anschließen. Da jedoch die Amplituden 16 zum Abschluss des durchgeführten Verfahrens in den vier Strahlkeulen 1, 2, 3, 4 relativ klein sind, sind auch keine weiteren Ziele vorhanden, so dass mit diesem zweiten Zyklus 14 das Verfahren abgeschlossen ist.
Ausgehend von vier Strahlkeulen 1, 2, 3, 4 werden in Figur 3 die Gütemaße in Abhängigkeit von der Lage der Ziele 17, 18 illustriert. Dabei wird von den für die Winkelbestimmung wesentlichen Gütemaßen 2, 3, 4 ausgegangen, die den aus der Ermittlung der Winkelposition des jeweiligen Zieles 17, 18 resultierenden Winkelwerten zugeordnet sind, so dass durch einen nachgeschalteten Tracking-Algorithmus die Qualität und Sicherheit der Winkelbestimmung berücksichtigt wird. Das hieraus resultierende Ergebnis in Form einer Bewertung der Winkelbestimmung unter Berücksichtigung der Bedingungen geht aus der Tabelle hervor, die die Ermittlung eines Gütemaßes für ein System mit vier Strahlkeulen und zwei Zielen beinhaltet.
Aus Figur 4, in der detektierte Zielwinkel in Abhängigkeit von vorgegebenen Zielwinkeln aufgetragen sind, sind die Simulationsergebnisse ersichtlich, die aus einem Antennendiagramm mit vier Strahlkeulen 1, 2, 3, 4 berechnet wurden. Die vorgegebenen Winkelpositionen werden dabei durch die strichpunktierten Linien 19 symbolisiert. Während sich das erste Ziel 17 fest bei 6° befindet, variiert die Position des zweiten Zieles 18 im Bereich von -12° bis 12°. Die Signalamplituden vom ersten Ziel 17 zum zweiten Ziel 18 haben das Verhältnis 1,5 : 1. Sowohl die punktiert dargestellten Symbole als auch die strichpunktiert dargestellten Symbole zeigen die Ergebnisse der Winkelbestimmung des ersten und zweiten Zieles 17, 18. Der Typ des Symbols bezeichnet das der Winkelbestimmung zugeordnete Gütemaß ebenfalls anhand der Tabelle, die die Ermittlung eines Gütemaßes für ein System mit vier Strahlantennen und zwei Zielen beinhaltet. Dabei entspricht ein Kreis dem Gütemaß 5, ein Dreieck mit einer Spitze nach oben dem Gütemaß 4, ein Dreieck mit der Spitze nach unten dem Gütemaß 3 und ein Kreuz dem Gütemaß 2.

Die Gütezahlen und das aus dem Mehrzielverfahren resultierende Verhältnis der Signalstärken, also das Verhältnis der Beträge aus den Skalarprodukten $s_{j1}/s_{j2}$ gehen aus dem unteren Teil der Figur 4 hervor.

Für die einzelnen Winkelbereiche des zweiten Zieles 18 ergibt sich eine Winkelbestimmung, die der nachfolgenden Tabelle zu entnehmen ist:

| Winkelbereich zweites Ziel 18 | Winkelbestimmung |
|---|---|
| -12°...-2° | beide Ziele sicher erkannt und im Winkel bestimmt |
| -2° ...+3° | Zweizielszenario sicher erkannt, Winkelbestimmung ist fehlerbehaftet |
| +3° ...+5° | ein Ziel im Winkel bestimmt, Winkel liegt zwischen Ziel 17 und Ziel 18 mit Tendenz zum stärkeren Ziel, Zweizielszenario erkannt (Ziel 18 hat Gütemaß 1) |
| +5° ...+7,5° | ein Ziel im Winkel bestimmt, Winkel liegt zwischen Ziel 17 und Ziel 18 mit Tendenz zum stärkeren Ziel, Einzielszenario erkannt |
| +7,5° ...+10° | ein Ziel im Winkel bestimmt, Winkel liegt bei Ziel 17 (stärkeres Ziel), Zweizielszenario erkannt (Ziel 18 hat Gütemaß 1) |
| +10° ...+12° | ein Ziel im Winkel bestimmt, Winkel liegt bei Ziel 17 (stärkeres Ziel), Einzielszenario erkannt |

**Patentansprüche**

1. Verfahren zur Winkelbestimmung bei Mehrzielszenarien für Mehrkeulen-Monopulsradar, wobei über eine oder mehrere Antennen in der Azimut-Ebene mehrere Strahlkeulen ausgebildet werden, die sich jeweils paarweise in Teilbereichen überlappen und über die das Radarsignal gleichzeitig oder in zeitlicher Abfolge oder über eine separate Antenne ausgesendet wird und das reflektierte Signal über die Strahlkeulen ebenfalls gleichzeitig oder in zeitlicher Abfolge oder über eine separate Antenne empfangen und weiter verarbeitet wird,
**gekennzeichnet durch**
einen Algorithmus, der zur Trennung der Signalanteile der einzelnen Ziele im Wesentlichen folgende Verfahrensschritte beinhaltet:

  - Bestimmung von zwei benachbarten Strahlkeulen (n), in denen die größten Signalamplituden auftreten,
  - Ermittlung der Winkelposition des jeweiligen Zieles aus den beiden ausgewählten Signalen der benachbarten Strahlkeulen (n), in denen die größten Signalamplituden auftreten,
  - Einholung eines normierten "idealen" Einziel-Signalmusters ($Z_n$) aus dem Speicher des Prozessors des Radarsystems für die Winkelposition des jeweiligen Zieles aus den beiden ausgewählten Signalen,
  - Bildung des Skalarproduktes ($s_j$) aus den Basisband-Empfangssignalen ($S_n$) der Strahlkeulen (n) mit dem "idealen" Einziel-Signalmuster ($Z_n$) für den Zielwinkel ($\alpha_j$) des Zyklus (j) bei Abbildung des "idealen" Einziel-Signalmusters ($Z_n$) auf die Basisband-Empfangssignale ($S_n$) nach der Gleichung

$$s_j = \sum_n S_n \cdot Z_n (\alpha_j)^*,$$

  - Ermittlung der Signalamplituden ($S_n^{neu}$) **durch** Bildung des Produktes aus dem Ergebnis des Skalarproduktes ($s_j$) mit dem Einziel-Signalmuster ($Z_n$) und Subtraktion des Produktes von den Basisband-Empfangssignalen ($S_n$) nach der Gleichung

$$S_n^{neu} = S_n - s_j \cdot Z_n (\alpha_j),$$

Überprüfung der Signalamplituden ($S_n^{neu}$) anhand einer Schwelle, ob sie Signale eines weiteren Ziels enthalten, und Starten eines neuen Zyklus mit ($S_n^{neu}$) als Eingangsgröße, wenn es Signalanteile gibt, die auf ein weiteres Ziel hinweisen.

**2.** Verfahren nach Anspruch 1,
**dadurch gekennzeichnet, dass**
bei der Bestimmung der beiden benachbarten Strahlkeulen (n), in denen die größten Signalamplituden auftreten, diese beiden Signalanteile vom stärksten Ziel dominiert werden, wenn sich mehrere Ziele in der Entfernungs- und Geschwindigkeitszelle befinden.

**3.** Verfahren nach einem der vorhergehenden Ansprüche,
**dadurch gekennzeichnet, dass**
zur Ermittlung der Winkelposition des jeweiligen Ziels aus den beiden ausgewählten Signalen der benachbarten Strahlkeulen (n), in denen die größten Signalamplituden auftreten, durch eine Suche über im Speicher des Prozessors des Radarsystems abgelegte Signalmuster vorgenommen wird.

**4.** Verfahren nach Anspruch 2,
**dadurch gekennzeichnet, dass**
zur Ermittlung der Winkelposition des jeweiligen Zieles aus den beiden ausgewählten Signalen der benachbarten Strahlkeulen (n), in denen die größten Signalamplituden auftreten, der Zielwinkel ($\alpha_j$) direkt aus dem Betragsverhältnis und/oder Phasenverhältnis und/oder komplexen Quotienten der beiden ausgewählten Signale der benachbarten Strahlkeulen (n) berechnet wird.

**5.** Verfahren nach Anspruch 3 und 4,
**dadurch gekennzeichnet, dass**
bei der Einholung eines normierten "idealen" Einziel-Signalmuster ($Z_n$) dieses durch Kalibrationsmessungen eines Radarziels in Abhängigkeit vom Zielwinkel ($\alpha_j$) ermittelt wird.

**6.** Verfahren nach Anspruch 5,
**dadurch gekennzeichnet, dass**
"ideale" Einziel-Signalmuster ($Z_n$) für bestimmte Zielwinkel im Speicher des Prozessors des Radarsystems hinterlegt werden, wobei Zwischenwerte für weitere Zielwinkel ($\alpha_j$) nach Betrag und Phase interpoliert werden.

**7.** Verfahren nach Anspruch 5 und 6,
**dadurch gekennzeichnet, dass**
bei der Ermittlung der Signalamplituden ($S_n^{neu}$) durch Subtraktion in den Signalamplituden ($S_n^{neu}$) nur dazu orthogonale Signalanteile erhalten bleiben, die entweder einem weiteren Ziel zugeordnet werden oder Rauschen sind.

**8.** Verfahren nach Anspruch 7,
**dadurch gekennzeichnet, dass**
durch eine Vergrößerung des Unterschiedes der Radarquerschnitte der Ziele und damit der Stärke die Winkelbestimmung verbessert wird.

**9.** Verfahren nach einem oder mehreren der Ansprüche 1 bis 8,
**dadurch gekennzeichnet, dass**
bei der Winkelbestimmung von zwei Zielen diese in nicht benachbarten Strahlkeulen (n) liegen.

**10.** Verfahren nach einem oder mehreren der Ansprüche 1 bis 8,
**dadurch gekennzeichnet, dass**
bei der Winkelbestimmung von zwei Zielen diese jeweils jenseits der Mitte an den voneinander abgewandten Seiten zweier benachbarter Strahlkeulen (n) liegen.

**11.** Verfahren nach Anspruch 9 und 10,
**dadurch gekennzeichnet, dass**
bei einem Abstand vom 1,5...2fachen der Breite einer Strahlkeule (n) eine Bestimmung der Winkelposition beider Ziele durchgeführt wird.

**12.** Verfahren nach einem oder mehreren der Ansprüche 1 bis 7,

**dadurch gekennzeichnet, dass**
den aus der Ermittlung der Winkelposition des jeweiligen Zieles resultierenden Winkelwerten Gütemaße zugeordnet werden, so dass durch einen nachgeschalteten Tracking-Algorithmus die Qualität und die Sicherheit der Winkelbestimmung berücksichtigt wird.

**13.** Verfahren nach Anspruch 12,
**dadurch gekennzeichnet, dass**
die Gütemaße zu den Radarzielen bei einer Fusion der Radardaten mit Videosensorik oder mit Daten anderer Radarsensoren zugeordnet werden.

**14.** Verfahren nach Anspruch 13,
**dadurch gekennzeichnet, dass**
der Bereich, in dem im Videobild nach einem vom Radar identifizierten Objekt gesucht wird, in Abhängigkeit von der Güte der Winkelbestimmung der Radarziele verändert wird, wobei eine hohe Güte einem kleinen Suchbereich und eine niedrige Güte einem großen Suchbereich entspricht, in dem das jeweilige Ziel gesucht wird.

**Claims**

**1.** Method for angle determination in multiple-target scenarios for multiple-lobe monopulse radar, in which a plurality of beam lobes are formed in the azimuth plane by means of one or more antennas, each overlap in pairs in the subareas, and by means of which the radar signal is transmitted at the same time or in a time sequence or via a separate antenna, and the reflected signal is likewise received at the same time via the beam lobes or in a time sequence or via a separate antenna, and is processed further,
**characterized by**
an algorithm which essentially includes the following method steps for separation of the signal components from the individual targets:

- determination of two adjacent beam lobes (n) in which the highest signal amplitudes occur,
- determination of the angle position of the respective target from the two selected signals from the adjacent beam lobes (n) in which the highest signal amplitudes occur,
- retrieval of a normalized "deal" single-target signal pattern ($Z_n$) from the memory in the processor for the radar system for the angle position of the respective target from the two selected signals,
- formation of the scalar product ($s_j$) from the baseband received signals ($S_n$) from the beam lobes (n) with the "ideal" single-target signal pattern ($Z_n$) for the target angle ($\alpha_j$) in the cycle (j) for mapping of the "ideal" single-target signal pattern ($Z_n$) onto the baseband received signals ($S_n$) using the equation:

$$\cdot \; S_j \; = \; \sum_n \; S_n \; \cdot \; Z_n \; (\alpha_j)^*,$$

- determination of the signal amplitudes ($S_n^{new}$) by formation of the product of the result of the scalar product ($s_j$) and the single-target signal pattern ($Z_n$) and subtraction of the product from the baseband received signals ($S_n$) using the equation:

$$S_n^{new} \; = \; S_n \; - \; s_j \; \cdot \; Z_n \; (\alpha_j),$$

checking of the signal amplitudes ($S_n^{new}$) on the basis of a threshold, to determine whether they contain signals from a further target, and starting of a new cycle with ($S_n^{new}$) as the input variable if there are signal components which indicate a further target.

**2.** Method according to Claim 1,
**characterized in that**
in the process of determination of the two adjacent beam lobes (n) in which the highest signal amplitudes occur, these two signal components are dominated by the strongest target when there are a plurality of targets in the range cell and velocity cell.

3. Method according to one of the preceding claims,
   **characterized in that**,
   in order to determine the angle position of the respective target from the two selected signals from the adjacent beam lobes (n) in which the highest signal amplitudes occur, a search is carried out of the signal patterns which are stored in the memory in the processor for the radar system.

4. Method according to Claim 2,
   **characterized in that**,
   in order to determine the angle position of the respective target from the two selected signals from the adjacent beam lobes (n) in which the highest signal amplitudes occur, the target angle ($\alpha_j$) is calculated directly from the magnitude ratio and/or phase ratio and/or complex quotients of the two selected signals from the adjacent beam lobes (n).

5. Method according to Claims 3 and 4,
   **characterized in that**,
   during the retrieval of a normalized "ideal" single-target signal pattern ($Z_n$), this pattern is determined by calibration measurements of a radar target as a function of the target angle ($\alpha_j$).

6. Method according to Claim 5,
   **characterized in that**
   "ideal" single-target signal patterns ($Z_n$) for specific target angles are stored in the memory in the processor of the radar system, with intermediate values for further target angles ($\alpha_j$) being interpolated on the basis of magnitude and phase.

7. Method according to Claims 5 and 6,
   **characterized in that**,
   during the determination of the signal amplitudes ($_{Sn}{}^{new}$) by subtraction, only signal components which are orthogonal thereto and are either associated with a further target or are noise are retained in the signal amplitudes ($S_n{}^{new}$).

8. Method according to Claim 7,
   **characterized in that**
   the angle determination is improved by an increase in the different between the radar cross-sections of the targets and thus the strength.

9. Method according to one or more of Claims 1 to 8,
   **characterized in that**,
   in order to determine the angles of two targets, they are located in beam lobes (n) which are not adjacent.

10. Method according to one or more of Claims 1 to 8,
    **characterized in that**,
    in order to determine the angles of two targets, they are in each case located beyond the centre on those sides of two adjacent beam lobes (n) which face away from one another.

11. Method according to Claims 9 and 10,
    **characterized in that**,
    in the case of an interval of 1.5 ... 2-times the width of a beam lobe (n), the angle position of both targets is determined.

12. Method according to one or more of Claims 1 to 7,
    **characterized in that**
    quality measures are allocated to the angle values which result from the determination of the angle position of the respective target, so that a subsequent tracking algorithm takes account of the quality and the reliability of the angle determination.

13. Method according to Claim 12,
    **characterized in that**
    the quality measures are allocated to the radar targets during a fusion process of the radar data with a video sensor system or with data from other radar sensors.

**14.** Method according to Claim 13,
**characterized in that**
the area in which an object which has been identified by the radar is looked for in the video image is changed as a function of the quality of the angle determination of the radar targets, with a high quality corresponding to a small search area and a low quality corresponding to a large search area in which the respective target is looked for.

**Revendications**

**1.** Procédé pour une détermination d'angle en présence de scénarios à cibles multiples pour un radar monopulsé à lobes multiples, selon lequel une ou plusieurs antennes forment dans le plan d'azimut plusieurs lobes de rayonnement qui se chevauchent respectivement par paires dans des zones partielles, et émettent le signal radar simultanément ou successivement ou par une antenne séparée, et le signal réfléchi est également reçu et traité par les lobes de rayonnement, simultanément ou successivement ou par une antenne séparée,
**caractérisé par**
un algorithme qui comprend essentiellement les étapes de procédé suivantes pour séparer les parties de signal des différentes cibles :

- détermination de deux lobes de rayonnement (n) voisins, dans lesquels se produisent les plus grandes amplitudes de signal,
- détermination de la position angulaire de la cible respective à partir des deux signaux choisis des lobes de rayonnement (n) voisins dans lesquels se produisent les plus grandes amplitudes de signal,
- extraction à partir de la mémoire du processeur du système radar d'un modèle de signal ($Z_n$) « idéal » normé d'une cible unique pour la position angulaire de la cible respective à partir des deux signaux choisis,
- formation d'un produit scalaire ($s_j$) à partir des signaux de réception ($S_n$) de la bande de base des lobes de rayonnement (n) avec le modèle de signal ($Z_n$) « idéal » d'une cible unique pour l'angle cible ($\alpha_j$) du cycle (j), en reproduisant le modèle de signal ($Z_n$) « idéal » d'une cible unique sur les signaux de réception ($S_n$) de la bande de base, selon l'équation suivante :

$$s_j = \sum_n S_n \cdot Z_n (\alpha_j)^*,$$

- détermination des amplitudes de signal ($S_n^{nouveau}$) par la formation du produit, à partir du résultat du produit scalaire ($s_j$) avec le modèle de signal ($Z_n$) d'une cible unique, et la soustraction du produit des signaux de réception ($S_n$) de la bande de base selon l'équation :

$$S_n^{nouveau} = S_n - s_j \cdot Z_n (\alpha_j),$$

- vérification des amplitudes de signal ($S_n^{nouveau}$) à l'aide d'un seuil, afin de savoir si elles contiennent des signaux d'une autre cible, et démarrage d'un nouveau cycle avec ($S_n^{nouveau}$) comme grandeur d'entrée, s'il y a des parties de signal qui indiquent une autre cible.

**2.** Procédé selon la revendication 1,
**caractérisé en ce que**
lors de la détermination des deux lobes de rayonnement (n) voisins, dans lesquels se produisent les plus grandes amplitudes de signal, ces deux parties de signal sont dominées par la plus forte cible si plusieurs cibles se trouvent dans la cellule de distance et de vitesse.

**3.** Procédé selon l'une quelconque des revendications précédentes,
**caractérisé en ce que**
pour déterminer la position angulaire de la cible respective, à partir des deux signaux choisis des lobes de rayonnement (n) voisins dans lesquels se produisent les plus grandes amplitudes de signal, on effectue une recherche à l'aide de modèles de signal déposés dans la mémoire du processeur du système radar.

**4.** Procédé selon la revendication 2,
**caractérisé en ce que**
pour déterminer la position angulaire de la cible respective, à partir des deux signaux choisis des lobes de rayonnement (n) voisins dans lesquels se produisent les plus grandes amplitudes de signal, on calcule l'angle cible ($\alpha_j$) directement à partir du rapport des montants et/ou du rapport des phases et/ou des coefficients complexes des deux signaux choisis des lobes de rayonnement (n) voisins.

**5.** Procédé selon les revendications 3 et 4,
**caractérisé en ce que**
lors de l'extraction d'un modèle de signal ($Z_n$) « idéal » normé d'une cible unique, celui-ci est déterminé par des mesures de calibrage d'une cible radar en fonction de l'angle cible ($\alpha_j$).

**6.** Procédé selon la revendication 5,
**caractérisé en ce que**
des modèles de signal ($Z_n$) « idéaux » d'une cible unique pour des angles cibles déterminés sont déposés dans la mémoire du processeur du système radar, en interpolant des valeurs intermédiaires pour d'autres angles cibles ($\alpha_j$), suivant le montant et la phase.

**7.** Procédé selon les revendications 5 et 6,
**caractérisé en ce que**
lors de la détermination des amplitudes de signal ($S_n^{nouveau}$) on ne conserve, par soustraction dans les amplitudes de signal ($S_n^{nouveau}$), que des parties de signal orthogonales soit associées à une autre cible, soit qui sont des bruits.

**8.** Procédé selon la revendication 7,
**caractérisé en ce que**
la détermination de l'angle est améliorée par un agrandissement de la différence des sections radar des cibles et par conséquent de l'intensité.

**9.** Procédé selon une ou plusieurs des revendications 1 à 8,
**caractérisé en ce que**
lors de la détermination de l'angle de deux cibles, celles-ci se situent dans des lobes de rayonnement (n) non voisins.

**10.** Procédé selon une ou plusieurs revendications 1 à 8,
**caractérisé en ce que**
lors de la détermination de l'angle de deux cibles, celles-ci se situent chacune au-delà du centre sur les faces détournées l'une de l'autre de deux lobes de rayonnement (n) voisins.

**11.** Procédé selon les revendications 9 et 10,
**caractérisé en ce qu'**
on effectue une détermination de la position angulaire des deux cibles à une distance de 1,5 ... 2 fois la largeur d'un lobe de rayonnement (n).

**12.** Procédé selon une ou plusieurs des revendications 1 à 7,
**caractérisé en ce qu'**
on associe des grandeurs de qualité aux valeurs d'angle résultant de la détermination de la position angulaire de la cible respective, de sorte un algorithme de pointage prend en compte la qualité et la sécurité de la détermination d'angle.

**13.** Procédé selon la revendication 12,
**caractérisé en ce que**
les grandeurs de qualité sont associées aux cibles radar lors d'une fusion des données radar, avec des capteurs vidéo ou avec des données d'autres capteurs radar.

**14.** Procédé selon la revendication 13,
**caractérisé en ce que**
la zone dans laquelle l'image vidéo est recherchée, selon un objet identifié par le radar, est modifiée en fonction de la qualité de la détermination de l'angle des cibles radar, une grande qualité correspondant à une petite zone de recherche, tandis qu'une faible qualité équivaut à une grande zone de recherche, dans lesquelles la cible respective est recherchée.

Fig. 1

Fig. 2

Fig.3

Fig.4